# EUROPÄISCHE PATENTANMELDUNG

(11) **EP 1 561 538 A1**
(43) Veröffentlichungstag der Anmeldung: **10.08.2005**
(21) Anmeldenummer: 05001988.4
(22) Anmeldetag: 01.02.2005
(51) Int. Cl.: B23K 26/04, B23K 26/42, G01B 11/27, G01B 11/00

(54) **Vorrichtung für die Justierung der Zentrierung und der Fokuslage eines Laserstrahls bei einer Laserbearbeitungsmaschine**

(30) Priorität: 05.02.2004 DE 102004005902
(71) Anmelder: Messer Cutting & Welding GmbH, 64823 Gross-Umstadt (DE)
(72) Erfinder: Faust, Josef, 64711 Erbach (DE)
(74) Vertreter: Staudt, Armin, Dipl.-Ing.

(57) **Zusammenfassung**

Um ausgehend von einer bekannten Vorrichtung für die Justierung eines Laserstrahls bei einer Laserbearbeitungsmaschine, welche ausgestattet ist mit einer Werkstückaufnahme zur Aufnahme und Lagerung eines zu bearbeitenden Werkstücks, mit wenigstens einem Laserschneidkopf (1), der eine mit einer Schneiddüsenöffnung versehene Schneiddüse (2) aufweist, mittels der ein Laserstrahl auf das Werkstück zu richten ist, eine schnelle und zuverlässige Kontrolle der Zentrierung und der Fokuslage des Laserstrahls zu ermöglichen, wird erfindungsgemäß vorgeschlagen, dass zur Justierung des Laserstrahls eine Ausrichteeinheit (8) vorgesehen ist, die bei dem in einer Prüfposition positionierten Laserschneidkopf (1) in Ausbreitungsrichtung des Laserstrahls angeordnet ist, und die aufweist: ein Schneiddüsen-Fixierungselement (3), ein Projektionselement (4) für die Erfassung einer Projektion des Laserstrahls in einer Bildebene (B), die in einem vorgegebenen Fokus-Abstand zu der an dem Fixierungselement anliegenden Schneiddüse (2) verläuft, und eine Auswerteeinheit.

## Beschreibung

Die Erfindung betrifft eine Vorrichtung für die Justierung eines Laserstrahls bei einer Laserbearbeitungsmaschine, welche ausgestattet ist mit einer Werkstückaufnahme zur Aufnahme und Lagerung eines zu bearbeitenden Werkstücks, mit wenigstens einem Laserschneidkopf, der eine mit einer Schneiddüsenöffnung versehene Schneiddüse aufweist, mittels der ein Laserstrahl auf das Werkstück zu richten ist.

Laserbearbeitungsmaschinen werden insbesondere zum Aus- oder Abschneiden von Konturen aus Blechteilen eingesetzt. Die Bearbeitung der Werkstücke erfolgt, indem ein fokussierter Laserstrahl, der aus der Schneiddüsenöffnung einer Schneiddüse austritt, auf das zu bearbeitende Werkstück gerichtet und entlang einer vorgegebenen Schneidkontur geführt wird. Häufig ergibt sich beim Ausschneiden oder Lochen von Blechen eine geschlossene Schnittkontur, wobei zu gewährleisten ist, dass der fokussierte Laserstrahl nach dem Durchlaufen des Schnittkontur wieder exakt an seinen Ausgangspunkt gelangt. Entscheidend hierfür und für eine hohe Schnittqualität insgesamt ist eine exakte Justierung der Fokuslage und des Auftreffpunktes des Laserstrahls auf dem Werkstück.

Die Justierung des Auftreffpunktes des Laserstrahls auf der Werkstückoberfläche erfolgt bisher dadurch, dass der Laserstrahl stets auf die Mitte der Schneiddüsenöffnung zentriert wird. Hierzu wird der Rand der Schneiddüsenöffnung mit einer Stempelfarbe eingefärbt, auf die eingefärbte Fläche ein Klebstreifen aufgebracht und daraufhin der Laserstrahl kurz eingeschaltet. An dem abgezogenen Klebstreifen ist die Lage des Laserstrahls in Bezug auf die Düsenöffnung der Laserschneiddüse in Form eines eingebrannten Loches in einer nicht eingefärbten Kreisfläche erkennbar. Zur Korrektur der Zentrierung dienen entsprechende Positioniereinheiten mit Justierschrauben, mittels denen die Lage des Laserstrahls in der Ebene der Schneiddüsenöffnung (in x- und y-Richtung) verändert werden kann. Diese Vorgehensweise ist zeitaufwendig.

Die Fokuslage des Laserstrahls wird durch Verändern des Abstandes zwischen der Fokussierlinse des Laserschneidkopfes und der Schneiddüse eingestellt, da der Arbeitsabstand zwischen der Schneiddüse und der Werkstückoberfläche aus häufig produktionstechnischen Gründen nicht ohne weiteres veränderbar ist. Eine optimale Einstellung kann nur anhand mehrerer Schneidversuche ermittelt werden, eine Kontrollmöglichkeit besteht nicht.

Wegen des großen Aufwandes ist die bekannte Vorgehensweise zur Justierung des Laserstrahls insgesamt nicht dazu geeignet, eine ausreichende Schnittqualität in der laufenden Produktion zu gewährleisten.

Der Erfindung liegt daher die Aufgabe zugrunde, eine Vorrichtung zur schnellen und zuverlässigen Kontrolle der Zentrierung und der Fokuslage eines Laserstrahls bei einer Laserbearbeitungsmaschine bereitzustellen.

Diese Aufgabe wird ausgehend von einer Vorrichtung mit den eingangs genannten Merkmalen erfindungsgemäß dadurch gelöst, dass zur Justierung des Laserstrahls eine Ausrichteeinheit vorgesehen ist, die bei dem in einer Prüfposition positionierten Laserschneidkopf in Ausbreitungsrichtung des Laserstrahls angeordnet ist, und die aufweist:
- ein Schneiddüsen-Fixierungselement,
- ein Projektionselement für die Erfassung einer Projektion des Laserstrahls in einer Bildebene, die in einem vorgegebenen Fokus-Abstand zu der Schneiddüse verläuft,
- und eine Auswerteeinheit.

Das Justieren des Laserstrahls umfasst das Zentrieren in der Ebene der Schneiddüsenöffnung (im Folgenden auch als Positionierung in xy-Richtung bezeichnet) und/oder die Einstellung der Fokuslage des Laserstrahls (im Folgenden auch als Positionierung in z-Richtung bezeichnet). Erfindungsgemäß ist zum Justieren eine Ausrichteeinheit vorgesehen, die in Ausbreitungsrichtung des Laserstrahls gesehen hinter der Schneiddüse angeordnet ist, wenn sich der Laserschneidkopf in seiner Prüfposition befindet.

Die Ausrichteeinheit umfasst ein Schneiddüsen-Fixierungselement, zu dem die Schneiddüse einen festen Bezugspunkt hat, etwa indem sie an dem Fixierungselement anliegt oder indem sie damit verbunden ist. Dadurch wird gewährleistet, dass der Laserschneidkopf in seiner Prüfposition eine definierte Orientierung und Lage in Bezug auf die Ausrichteeinheit einnimmt. Die Fixierung des Laserschneidkopfes erfolgt vorteilhafterweise sowohl in Bezug auf die xy-Richtung als auch in Bezug auf die z-Richtung.

Weiterhin umfasst die Ausrichteeinheit ein in einer Bildebene angeordnetes Projektionselement, mittels dem eine Projektion des Laserstrahls in der Bildebene erzeugt oder erfasst wird (xy-Position des Laserstrahls), sobald der Laserstrahl aus der Schneiddüsenöffnung auf das Projektionselement auftrifft. Das Projektionselement ist ein optisches Bauteil, beispielsweise ein Fotozellen-Array, eine Streuscheibe oder ein Schirm. Es liefert eine Information über die Lage des Laserstrahls und über den Strahlquerschnitt in der Bildebene.

Diese Information wird einer Auswerteeinheit zugeführt. Der Auswertung der Information umfasst einen Vergleich der ermittelten xy-Position des Laserstrahls mit einem Sollwert und eine anschließende Korrektur, sofern diese erforderlich ist. Der Sollwert der Position ist beispielsweise die Projektion des Mittelpunktes der Schneiddüsenöffnung auf die Bildebene. Beim Einsatz eines Fotozellen-Arrays oder ähnlicher aktiver Fotoelemente kann die Information über Lage und Querschnitt des Laserstrahls in der Bildebene ohne das Erzeugen eines realen Bildes ausgewertet werden und es können entsprechende Korrekturmaßnahmen ergriffen werden. Andernfalls wird ein entsprechendes Abbild des Laserstrahls in der Bildebene einer Bildanalyse unterzogen und unmittelbar rechnergesteuert oder manuell ausgewertet und es werden entsprechende Korrekturen der Positionierung vorgenommen.

Die erfindungsgemäße Vorrichtung ermöglicht es, eine Abweichung der Lage des Laserstrahls von dem Sollwert zuverlässig und ohne großen Aufwand festzustellen und eine geeignete und reproduzierbare Korrektur vorzunehmen.

Bei einer besonders bevorzugten Ausführungsform der erfindungsgemäßen Vorrichtung umfasst die Ausrichteeinheit ein die Projektion des Laserstrahls erfassendes Bildbetrachtungselement.

Hierbei wird ein reales und sichtbares Abbild der Projektion des Laserstrahls in der Bildebene erzeugt und anschließend im Hinblick auf die Lage des Laserstrahls ausgewertet. Für die Erzeugung des sichtbaren Abbildes eines Infrarot- Laserstrahls ist es notwendig, dass entweder das Projektionselement oder das Bildbetrachtungselement dazu geeignet ist, das auf dem Projektionselement auftreffende infrarote Laserlicht in ein sichtbares Bild umzuwandeln. Das vom Bildbetrachtungselement wiedergegebene Abbild des Laserstrahls wird aufgezeichnet oder an einem Bildschirm, einem Monitor oder einem anderen Wiedergabegerät wiedergegeben und in Bezug auf die Positionierung des Laserstrahls in der xy-Richtung oder in z-Richtung ausgewertet. Die Bildauswertung umfasst einen Vergleich der im Bild zu entnehmenden xy-Position des Laserstrahls mit einem Sollwert der Position und eine anschließende Korrektur der Position, sofern dies erforderlich ist. Durch die Anordnung eines temperaturstabilen Projektionselementes vor dem Betrachtungselement ist es bei dieser Ausführungsform möglich, den Laserstrahl für die Zwecke der Zentrierung und Fokussierung mit einer Leistung zu betreiben, die den Betriebsbedingungen entsprechen, was die Genauigkeit der Justierung (insbesondere beim Auffinden des Fokus) verbessert.

Besonders bewährt hat sich eine Ausführungsform der Vorrichtung, bei der das Bildbetrachtungselement eine auf das Projektionselement gerichtete Kamera umfasst.

Mittels der Kamera können in der Bildebene erzeugte Bilder direkt aufgenommen und mittels eines geeigneten Wiedergabegerätes betrachtet werden, so dass eine erforderliche Korrektur sofort vorgenommen werden kann. Dabei kann es sich um eine Infrarot-Kamera handeln oder um eine Kamera für das sichtbare Wellenlängenspektrum, sofern eine sichtbare Projektion des Laserstrahls in der Projektionsebene erzeugt wird.

Die Realisierung dieser Ausführungsform der Erfindung gestaltet sich besonders einfach, wenn die Laserbearbeitungsmaschine bereits mit einem Kameramodul ausgestattet ist, wie sie beispielsweise in der EP 1211015 A1 beschrieben ist. Dort ist eine Verschleißkontroll-Einrichtung für die Schneiddüsen von Laserschneidmaschinen bekannt, bei der eine Kameraeinheit eingesetzt wird, um den Verschleißzustand der Laserschneiddüse zu überprüfen. Die erfindungsgemäße Vorrichtung für die Zentrierung des Laserstrahls ist ohne großen Kostenaufwand auch an allen anderen Laserschneidmaschinen nachrüstbar

Vorzugsweise ist die Kamera als CCD-Kamera-Modul ausgebildet.

Hierbei handelt es sich um ein handelsübliches Kameramodul in Form einer elektronischen Minikamera. Die in der Regel aus einem Kamerakopf (Bildaufnehmer, Objektiv und Blendensteuerung) und einem Netz- und Steuerteil bestehende CCD-Kamera zeichnet sich durch eine kompakte Bauweise aus und kann auf einer Platine in SMD-Technik montiert werden.

Wesentlich ist, dass das Bildbetrachtungselement auf die Bildebene gerichtet ist. Um eine einfache Erfassung der Projektion des Laserstrahls in der Projektionsebene zu gewährleisten, verläuft die Bildebene jedoch vorzugsweise zwischen dem Fixierungselement und dem Bildbetrachtungselement.

Im einfachsten Fall bietet es sich an, das Bildbetrachtungselement parallel zur Bildebene und senkrecht zur Ausbreitungsrichtung des Laserstrahls anzuordnen.

In einer besonders bevorzugten Ausgestaltung der erfindungsgemäßen Vorrichtung entspricht der Abstand zwischen dem Projektionselement und der an dem Fixierungselement anliegenden Schneiddüse dem Arbeitsabstand.

Hierbei fixiert das Fixierungselement die Schneiddüse in einem Abstand von dem Projektionselement, der im Idealfall exakt dem Arbeitsabstand entspricht. Dadurch wird die Justierung der Fokuslage des Laserstrahls erleichtert. Denn im Fokus ist der Querschnitt des Laserstrahls minimal, so dass durch Variation des Abstandes zwischen der Linse und der Laserdüse das Minimum der Projektionsfläche des Laserstrahls auf dem Projektionselement leicht ermittelt, und so der Fokus auf den Arbeitsabstand eingestellt werden kann. Abweichungen von +/- 20 Prozent vom Arbeitsabstand sind jedoch für den Erfolg der erfindungsgemäßen Lehre unschädlich.

Bei dem Projektionselement handelt es sich um ein vorzugsweise flächiges Werkstück, das die vom Laser abgegebene Infrarotstrahlung in eine für das Bildbetrachtungselement erkennbare Wellenlänge umwandelt oder in eine in der Bildebene definierte Form bringt. Vorzugsweise handelt es sich bei dem Projektionselement um einen Wandlerschirm für Infrarotstrahlung.

Eine weitere Verbesserung der erfindungsgemäßen Vorrichtung ergibt sich, wenn die Schneiddüse eine sich in Ausbreitungsrichtung des Laserstrahls verjüngende Außenkontur aufweist, wobei das Fixierungselement mit einer eine Öffnungsweite und einen Öffnungsrand aufweisenden Öffnung versehen ist, in welche die Schneiddüse in Prüfposition unter Anlage ihrer Außenkontur am Öffnungsrand hineinragt, wobei die Öffnungsweite den Abstand zwischen der Schneiddüse und dem Projektionselement bestimmt.

Bei dieser Ausführungsform der Erfindung sind Fixierungselement und Außenkontur der Schneiddüse so aufeinander abgestimmt, dass sich jeweils bei einem in Prüfposition befindlichen Laserschneidkopf zwischen der Schneiddüse und der Bildebene im Idealfall der vorgegebene Arbeitsabstand einstellt.

Nachfolgend wird die Erfindung anhand eines Ausführungsbeispiels und einer Patentzeichnung näher beschrieben. In der Zeichnung zeigen im Einzelnen
- **Figur 1**: eine erfindungsgemäße Laserbearbeitungsmaschine in Prüfposition anhand einer schematischen Schnittdarstellung,
- **Figuren 2a, 2b**: die Vorgehensweise zur Zentrierung des Laserstrahls anhand einer Schemazeichnung und
- **Figuren 3a, 3b**: die Vorgehensweise zur Einstellung der Fokuslage eines Laserstrahls anhand einer Schemazeichnung.

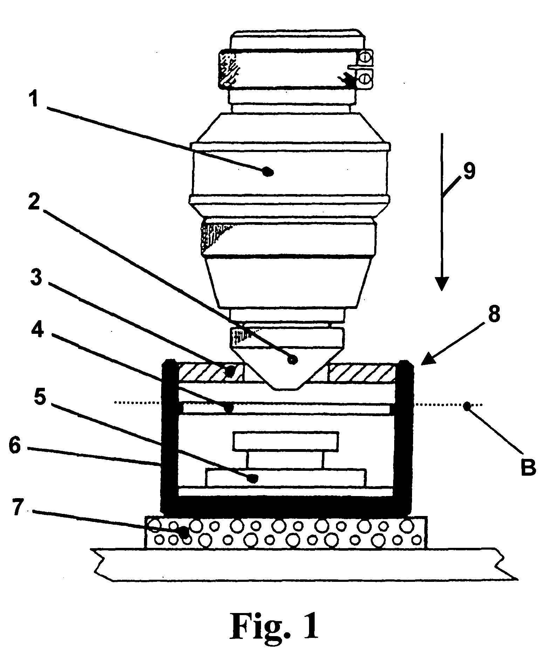

**Figur 1** zeigt in schematischer Schnittdarstellung eine Anordnung des Laserschneidkopfes 1 in Prüfposition zur Kontrolle oder Justierung des Laserstrahls mittels einer Zentrierhilfe, der insgesamt die Bezugsziffer 8 zugeordnet ist. Die Zentrierhilfe 8 besteht aus einem Gehäuse 6, das unterhalb des Laserschneidkopfes 1 angeordnet ist, und in dem im Strahlengang des Laserstrahls ein Zentrierring 3, ein Infrarot-Wandlerschirm 4 und ein Kameramodul 5 hintereinander angeordnet sind.

Der Zentrierring 3 weist eine Mittenöffnung auf, in welche die Schneiddüse 2 in Prüfposition des Laserschneidkopfes 2 hineinragt.

Der Infrarot-Wandlerschirm 4 ist zwischen dem Zentrierring 3 und dem Kameramodul 5 in der Bildebene "B" angeordnet, deren Abstand von der Schneiddüse 2 exakt dem Soll-Arbeitsabstand bei der Bearbeitung eines Werkstückes entspricht. Der Infrarot-Wandlerschirm 4 besteht aus einer etwa 3 mm dicken Keramik-Platte mit seitlichen Abmessungen von 50 x 50 mm, die unter der Bezeichnung "Sensorkarte CF-16-R" von der Firma Laser 2000 GmbH im Handel erhältlich ist. Diese spezielle Keramik ist in der Lage, die Infrarotstrahlung des Lasers in sichtbares Licht umzuwandeln und gleichzeitig die Energie des Lasers zum großen Teil zu absorbieren, so dass das im Strahlengang angeordnete Kameramodul 5 vor Beschädigungen bewahrt wird. Bei eingeschaltetem Laser wird auf dem Infrarot-Wandlerschirm 4 ein Abbild des Infrarot-Laserstrahls in der Bildebene "B" sichtbar, das mittels des darauf gerichteten CCD-Kameramoduls 5 erfasst wird.

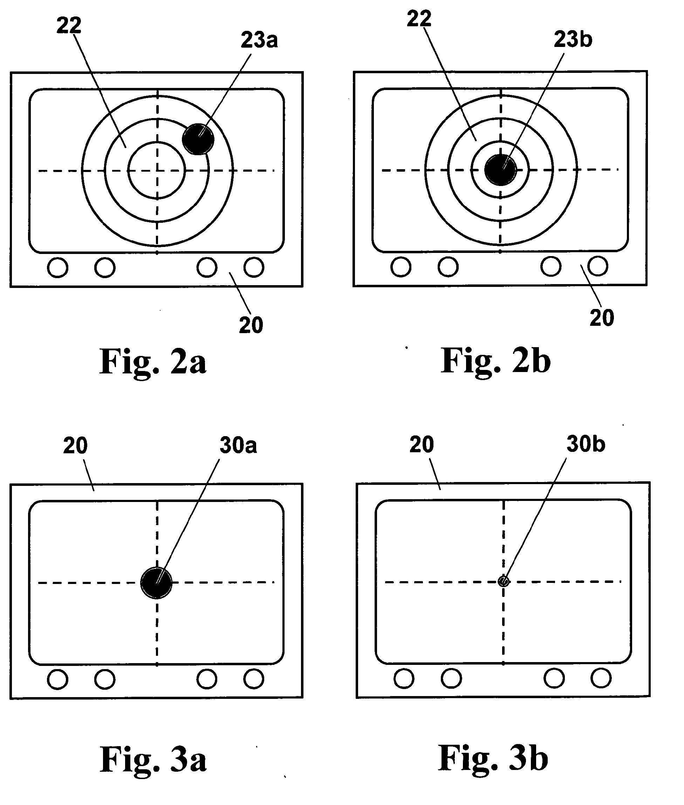

Das in dem Gehäuse 6 angeordnete Kameramodul 5 ist mit einem Monitor (Bezugsziffer 20 in den Figuren 2 und 3) verbunden. Es besteht aus einer mit einem Halbleiter-Sensor versehenen Schwarz-Weiß-CCD-Kamera, welche auf einer Platine von etwa 40 x 140 mm in SMD-Technik montiert und mittels Bandleiterkabel mit einem Netz- und Steuerteil verbunden ist.

Das Gehäuse 6 besteht aus einem lichtundurchlässigen Kunststoff oder aus Metall. Zur Vermeidung einer Beschädigung der Zentrierhilfe 8 ist die Unterseite des Gehäuses 6 mit einem elastischen Dämpfungsmaterial 7 versehen.

Nachfolgend wird die Vorgehensweise zur Justierung des Laserstrahls in Bezug auf die Lage in der Bildebene anhand eines Ausführungsbeispiels und Figur 1 und den **Figuren 2a und 2b** näher beschrieben.

Auf dem Monitor 20 wird das von dem Kameramodul 5 erfasste Abbild des Laserstrahls angezeigt. Zur Erleichterung der Justierung des Laserstrahls wird auf dem Monitor 20 zusätzlich ein Bildmuster in Form einer Zielscheibe 22 eingeblendet, welche die Soll-Lage des Laserstrahls als Mittelpunkt anzeigt. Alternativ dazu kann auch eine selbsthaftende Klarsichtfolie mit dem entsprechenden Aufdruck auf den Monitor 20 aufgebracht werden.

Zur Justierung des Laserstrahls werden Laserschneidkopf 1 und Schneiddüse 2 in z-Richtung 9 soweit vertikal verfahren bis die Schneiddüse 2 mit ihrer sich in Ausbreitungsrichtung des Laserstrahls konisch verjüngende Außenwandung am Rand der Mittenöffnung des Zentrierrings 3 anliegt. Bei nunmehr in Prüfposition in dem Zentrierring 3 angeordneter Schneiddüse 2 wird der Laserstrahl mehrfach kurz mit kleiner Leistung eingeschaltet, so dass sich ein entsprechendes Abbild 23a auf dem Wandlerschirm 4 zeigt, welches mittels des Kameramoduls 5 erfasst und als Bildsignal an den Monitor 20 übertragen wird. Auf dem Monitor 20 wird nun die aktuelle Position (Abbild 23a) des Laserstrahls in der Zielscheibe 22 sichtbar, wie dies in Figur 2a dargestellt ist. Eine Lagekorrektur kann an Justierschrauben zeitgleich erfolgen, um das Abbild 23b des Laserstrahls in die Mitte der Zielscheibe 22 zu stellen, wie es Figur 2b zeigt.

Nachfolgend wird die Vorgehensweise zur Einstellung der Fokuslage des Laserstrahls anhand eines Ausführungsbeispiels den **Figur 3a und 3b** beschrieben.

Auf dem Monitor 20 wird das von dem Kameramodul 5 erfasste Abbild des Laserstrahls angezeigt. Der Laserschneidkopf 1 wird durch Anlage an den Zentrierring 3 in die Prüfposition gebracht, so dass sich zwischen der Schneiddüse 2 und dem Wandlerschirm 4 ein exakt dem Arbeitsabstand entsprechender Abstand einstellt.

Zur Einstellung der Fokuslage wird der Laserstrahl mehrfach kurz eingeschaltet (mit der Betriebsleistung). Der Laserstrahl wird auf dem in der Bildebene angeordneten Wandlerschirm 4 sichtbar gemacht, mittels der CCD-Kamera erfasst und auf dem Monitor 20 wird der aktuelle Durchmesser des Laserstrahls als Bildpunkt 30a sichtbar, wie in der Figur 3a dargestellt. Eine Anpassung der Fokuslage erfolgt zeitgleich durch Verändern des Abstandes zwischen der Fokussierlinse im Laserschneidkopf und der Schneiddüse 2 mittels einer entsprechenden Justierschraube, so lange, bis der kleinst mögliche Bildpunkt 30b erhalten wird, wie dies die Figur 3b zeigt.

### Bezugszeichenliste

- 1: Schneidkopf
- 2: Schneiddüse
- 3: Zentrierring
- 4: Wandlerschirm
- 5: Kameramodul
- 6: Gehäuse
- 7: Elastisches Material
- 8: Zentrierhilfe insgesamt
- 9: Richtungspfeil (z-Richtung)
- 20: Monitor
- 22: Zielscheibe
- 23a: Abbild des Laserstrahls vor der Zentrierung (Fig. 2a)
- 23b: Abbild des Laserstrahls nach der Zentrierung (Fig. 2b)
- 30a: Abbild des Laserstrahls vor der Korrektur der Fokuslage (Fig. 3a)
- 30b: Abbild des Laserstrahls nach Korrektur der Fokuslage (Fig. 3b)
- B: Bildebene (xy-Richtung)

## Patentansprüche

1. Vorrichtung für die Justierung eines Laserstrahls bei einer Laserbearbeitungsmaschine, welche ausgestattet ist mit einer Werkstückaufnahme zur Aufnahme und Lagerung eines zu bearbeitenden Werkstücks, mit wenigstens einem Laserschneidkopf, der eine mit einer Schneiddüsenöffnung versehene Schneiddüse aufweist, mittels der ein Laserstrahl auf das Werkstück zu richten ist, **dadurch gekennzeichnet, dass** zur Justierung des Laserstrahls eine Ausrichteeinheit (8) vorgesehen ist, die bei dem in einer Prüfposition positionierten Laserschneidkopf (1) in Ausbreitungsrichtung des Laserstrahls angeordnet ist, und die aufweist:
• ein Schneiddüsen-Fixierungselement (3),
• ein Projektionselement (4) für die Erfassung einer Projektion des Laserstrahls in einer Bildebene (B), die in einem vorgegebenen Fokus-Abstand zu der Schneiddüse (2) verläuft,
• und eine Auswerteeinheit.

2. Vorrichtung nach Anspruch 1, **dadurch gekennzeichnet, dass** die Ausrichteeinheit (8) ein die Projektion des Laserstrahls erfassendes Bildbetrachtungselement (5) umfasst.

3. Vorrichtung nach Anspruch 2, **dadurch gekennzeichnet, dass** das Bildbetrachtungselement (5) eine auf das Projektionselement (4) gerichtete Kamera umfasst..

4. Vorrichtung nach Anspruch 3, **dadurch gekennzeichnet, dass** die Kamera als CCD-Kamera-Modul ausgebildet ist.

5. Vorrichtung nach einem der Ansprüche 2 bis 4, **dadurch gekennzeichnet, dass** die Bildebene (B) zwischen dem Fixierungselement (3) und dem Bildbetrachtungselement (5) verläuft.

6. Vorrichtung nach einem der vorhergehenden Ansprüche, **dadurch gekennzeichnet, dass** der Abstand zwischen dem Projektionselement (4) und der an dem Fixierungselement (3) anliegenden Schneiddüse dem Arbeitsabstand entspricht.

7. Vorrichtung nach einem der vorhergehenden Ansprüche, **dadurch gekennzeichnet, dass** das Projektionselement (4) ein Wandlerschirm für Infrarotstrahlung ist.

8. Vorrichtung nach einem der vorhergehenden Ansprüche, **dadurch gekennzeichnet, dass** die Schneiddüse (2) eine sich in Ausbreitungsrichtung (9) des Laserstrahls verjüngende Außenkontur aufweist, und dass das Fixierungselement (3) mit einer eine Öffnungsweite und einen Öffnungsrand aufweisenden Öffnung versehen ist, in welche die Schneiddüse (2) in Prüfposition unter Anlage ihrer Außenkontur am Öffnungsrand hineinragt, wobei die Öffnungsweite den Abstand zwischen der Schneiddüse (2) und dem Projektionselement (4) bestimmt.
